# EUROPEAN PATENT APPLICATION

(11) **EP 3 517 510 A1**
(43) Date of publication of application: **31.07.2019**
(21) Application number: 18153272.2
(22) Date of filing: 24.01.2018
(51) Int. Cl.: C03B 37/14, D02G 1/16

(54) **A TEXTURIZING DEVICE AND METHOD FOR EXPANDING A STRAND MATERIAL**

(71) Applicant: MachineTech Sweden AB, 37239 Ronneby (SE)
(72) Inventor: SALIM, Alexander, 37239 RONNEBY (SE); ARVIDSSON, Bo, 28144 STOBY (SE)
(74) Representative: Hansson Thyresson AB

(57) **Abstract**

A texturizing device (10) for expanding a fiber strand material, comprising a fiber strand inlet (11), a chamber (12), a fiber strand feeding tube (13) and a nozzle (14). The chamber (12) comprises an air inlet (24) for a flow of pressurized air, a rear opening (25) and a front opening (26). Said tube (13) is at least partially arranged inside the chamber (12) and comprises an outlet end portion (17) being enclosed by the nozzle (14) to form a passage (18) between them for the flow of pressurized air. The outlet end portion (17) of the tube (13) is arranged with one or more substantially flat external sides (34), so that the pressurized air from the air inlet (24) at least partially is divided into a plurality of flow portions guided towards the fiber strand exiting the tube (13). Disclosed is also a texturizing method for expanding a fiber strand material.

## Description

### FIELD OF THE INVENTION

The invention relates to a texturizing device for expanding a strand material. This type of devices is used for expanding a strand of material to form a texturized material, such as a material having a texture similar to wool, which type of products also is called wool-type products. This type of expanding of a strand material into a wool-type product is also called texturizing and sometimes also texturing. Such wool-type products are often used as insulation material, such as thermal and acoustic insulation materials, and as sound absorbing materials, such as sound absorbing materials for exhaust mufflers and other types of silencers. This type of devices is often used for texturizing a glass fiber strand into a texturized glass fiber material, such as glass wool and similar types of materials.

The present invention also relates to a method for providing such a device.

### PRIOR ART

A plurality of different types of texturizing devices for expanding a strand material, such as a glass fiber strand, is disclosed in the prior art. One type of prior art texturizing devices comprises a fiber feeding tube and a nozzle with a chamber for receiving said tube therein, so that the tube extends through the chamber and forms a passage between the exterior of the tube and the interior of the nozzle. The chamber is also arranged with an air inlet connected to a compressor or similar for introducing a flow of pressurized air into the chamber, around the tube, through the passage and into contact with the strand of material to expand it into the wool-type product before it exits through the nozzle together with the wool-type product.

However, there is a need for a texturizing device resulting in a favourable texturizing of the strand of material to provide a texturized material having favourable properties.

Hence, one problem with prior art devices for expanding a strand material into a wool-type product is that they are inefficient and that the texturized material produced thereby does not have the desired properties.

### BRIEF DESCRIPTION OF THE INVENTION

One object of the present invention is to avoid the problems of prior art devices indicated above and provide an efficient texturizing device and method, which produces a texturized material having desired properties. According to some optional embodiments, a texturizing device is achieved which allows for substantially reduced manufacturing costs. According to some optional embodiments a texturizing device is achieved, which has improved durability. According to some optional embodiments a texturizing device is achieved, wherein different parts easily can be replaced if required and which parts also can be provided with different properties to reduce manufacturing cost and also to prolong the durability.

The present invention relates to a texturizing device for expanding a fiber strand material, comprising a fiber strand inlet, a chamber, a fiber strand feeding tube and a nozzle, wherein the chamber is arranged with an air inlet for a flow of pressurized air, a rear opening and a front opening, and wherein the fiber strand feeding tube at least partially is arranged inside the chamber and comprises an outlet end portion being enclosed by the nozzle to form a passage for the flow of pressurized air between the exterior of the outlet end portion and the interior of the nozzle, characterised in that the outlet end portion of the fiber strand feeding tube is arranged with one or more substantially flat external sides, so that the pressurized air from the air inlet at least partially is divided into a plurality of flow portions guided towards the fiber strand exiting the tube. The outlet end portion of the tube being arranged with flat external sides results in an efficient texturizing and a texturized fiber material having favourable properties. It is believed that the external flat sides guide the air into flow portions which are then brought into contact with the fiber strand from directions corresponding to the different flat sides, which results in a favourable turbulence of the air in front of the outer end portion of the tube for texturizing the fiber strand.

The outlet end portion of the fiber strand feeding tube can be arranged with an exterior polygonal cross section having 3 to 6 sides, such as 4 sides, wherein the periphery of the outlet end portion can have a square configuration in cross section. It has been found that such a square configuration results in particularly favourable texturizing of the fiber strand and a texturized material having excellent properties for exhaust muffler applications and similar. It is believed that such a favourable texturizing effect still can be achieved by an outlet end portion having five or six sides.

The nozzle can comprise an interior tapering portion enclosing the outlet end portion of the fiber strand feeding tube, so that the passage between the exterior of the outlet end portion and the interior of the nozzle is tapered. Also, the interior tapering portion can have a circular cross section, wherein the passage at least partially is divided into a plurality of passage portions by means of the flat sides of the outlet end portion of the tube. Said flat sides result in the passage being narrower at corners between adjacent flat sides and wider in the middle of the flat sides to form passage portions between the flat sides of the outer end portion and a curved side of the interior tapering portion. Said passage portions can be connected to each other at said corners, so that air can be distributed around the outlet end portion.

The fiber strand feeding tube can be arranged with a rounded interior outlet edge to prevent the fibers from breaking when exiting the tube.

The texturizing device can comprise a fiber strand locking device for intermittently holding the fiber strand in a stationary position to prevent the fiber strand from backflowing due to the pressurized air. The fiber strand locking device can comprise one or more movable gripper fingers, which are arranged with an axis of rotation to be pivotal between a fiber strand clamping position and a fiber strand feeding position. The fiber strand locking device can be a self-contained unit that is produced separately and mounted to the chamber, which result in simple and cost-efficient manufacturing of the texturizing device.

The tube, nozzle, chamber and fiber strand locking device can all be separately produced parts which are attached to each other, which result in simple and cost-efficient manufacturing of the texturizing device, and give the possibility of a texturizing device having easily replaceable parts, and also give the possibility of producing the different parts in different materials to reduce cost and/or prevent wear.

The invention also relates to a method for expanding a fiber strand material, comprising the steps of
a) feeding a fiber strand into a fiber strand inlet and through a fiber strand feeding tube,
b) conducting a flow of pressurized air into a chamber enclosing at least a part of the tube, and distributing said air around the tube,
c) conducting the flow of pressurized air into a passage between the exterior of the tube and an interior of a nozzle surrounding an outlet end portion of the tube,
d) at least partially dividing the flow of pressurized air into a plurality of flow portions by means of the outlet end portion of the tube being arranged with an exterior polygonal configuration, and
e) bringing the plurality of flow portions of pressurized air into contact with the fiber strand exiting the tube and thereby expanding the fiber strand.

Further characteristics and advantages of the present invention will become apparent from the description of the embodiments below, the appended drawings and the dependent claims.

### SHORT DESCRIPTION OF THE DRAWINGS

The invention will now be described in more detail with the aid of exemplary embodiments and with reference to the accompanying drawings, in which
Fig. 1 is a schematic perspective view of a texturizing device according to one embodiment,
Fig. 2 is a schematic view of the texturizing device according to one embodiment,
Fig. 3 is a schematic exploded perspective view from above of the texturizing device according to one embodiment,
Fig. 4 is a schematic longitudinal section view along the line B-B of Fig. 2,
Fig. 5 is a schematic perspective view of a chamber of the texturizing device according to one embodiment,
Figs. 6-10 are schematic views from different sides of the chamber of Fig. 5,
Fig. 11 is a schematic perspective view of a fiber strand feeding tube of the texturizing device according to one embodiment,
Fig. 12 is a schematic longitudinal section view of the tube of Fig. 11,
Fig. 13 is a schematic front vew of the tube of Fig. 11,
Fig. 14 is a schematic side view of the tube of Fig. 11,
Fig. 15 is a schematic rear view of the tube of Fig. 11,
Fig. 16 is a schematic perspective view of a nozzle of the texturizing device according to one embodiment,
Fig. 17 is a schematic longitudinal section view of the nozzle of Fig. 16,
Fig. 18 is a schematic side view of the nozzle of Fig. 16,
Fig. 19 is a schematic front view of the nozzle of Fig. 16,
Fig. 20 is a schematic perspective view of a gripper bracket of a fiber strand locking device of the texturizing device according to one embodiment,
Figs. 21-24 are schematic views of the gripper bracket of Fig. 20,
Fig. 25 is a schematic perspective view of a gripper finger of the fiber strand locking device of the texturizing device according to one embodiment, and
Figs. 26-28 are schematic views of the gripper finger of Fig. 25.

### THE INVENTION

In some figures dimensions are given as one optional example of many according to the illustrated embodiment. It is understood that the dimensions can be varied and are not to be construed as limiting the invention as defined in the appended claims.

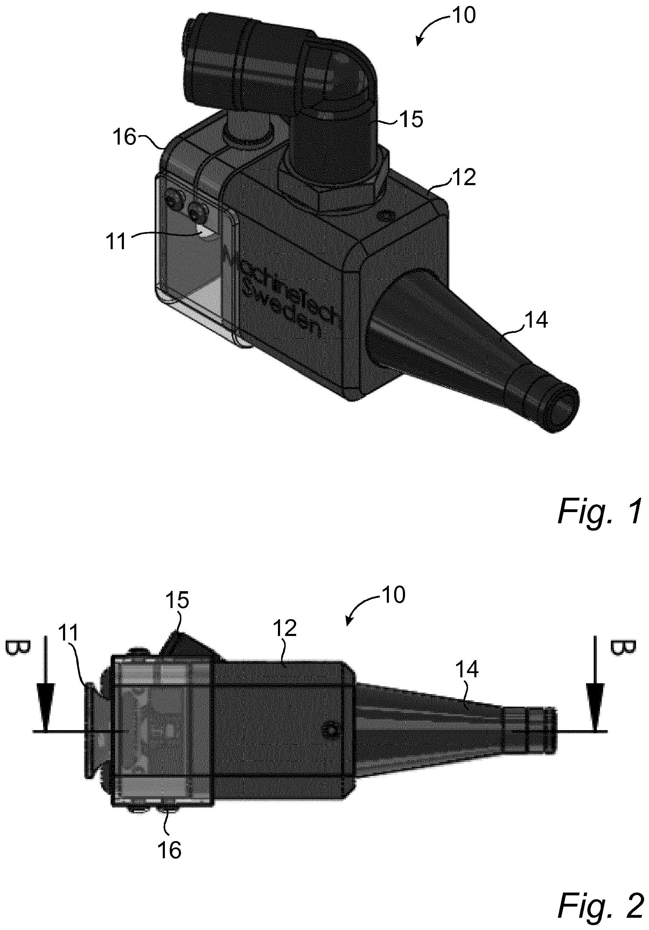

With reference to Fig. 1 a texturizing device 10 is illustrated schematically according to one embodiment. The texturizing device 10 is arranged for expanding a fiber strand of material to a texturized product. For example, the texturizing device 10 is arranged for expanding the fiber strand to a wool-type product. Such expanding of a fiber strand is also called texturizing or texturing. According to one embodiment, the texturizing device 10 is arranged for expanding a glass fiber strand to a texturized glass fiber product, such as glass wool or similar. For example, the texturizing device 10 is arranged for texturizing a glass fiber strand to an insulation product, such as a thermal and/or acoustic insulation product and/or a sound absorbing product. According to one embodiment, the texturizing device 10 is arranged for texturizing a glass fiber strand to a sound absorbing product for use within automotive industry for exhaust mufflers and similar silencers. The fiber strand comprises a plurality of fibers, such as glass fibers. The fiber strand is, e.g. a conventional glass fiber strand. Alternatively, the fiber strand is a mineral fiber strand comprising a mineral, such as basalt. Alternatively, the fiber material is a composite material. Alternatively, the fibers of the fiber material comprises a coating.

With reference to Figs. 1-4, the texturizing device 10 comprises a fiber strand inlet 11, a chamber 12, a fiber strand feeding tube 13 and a nozzle 14. According to the illustrated embodiments, the texturizing device 10 also comprises a connector tube 15 for connection to a supply of pressurized air, such as a compressor or similar (not illustrated). The connector tube 15 is connected to the chamber 12 for conducting a flow of pressurized air into the chamber 12. According to the illustrated embodiments, the texturizing device 10 also comprises a fiber strand locking device 16 for intermittently holding the fiber strand in a stationary position and prevent backflow of the fiber strand through the fiber strand feeding tube 13 due to the pressurized air conducted to the chamber 12.

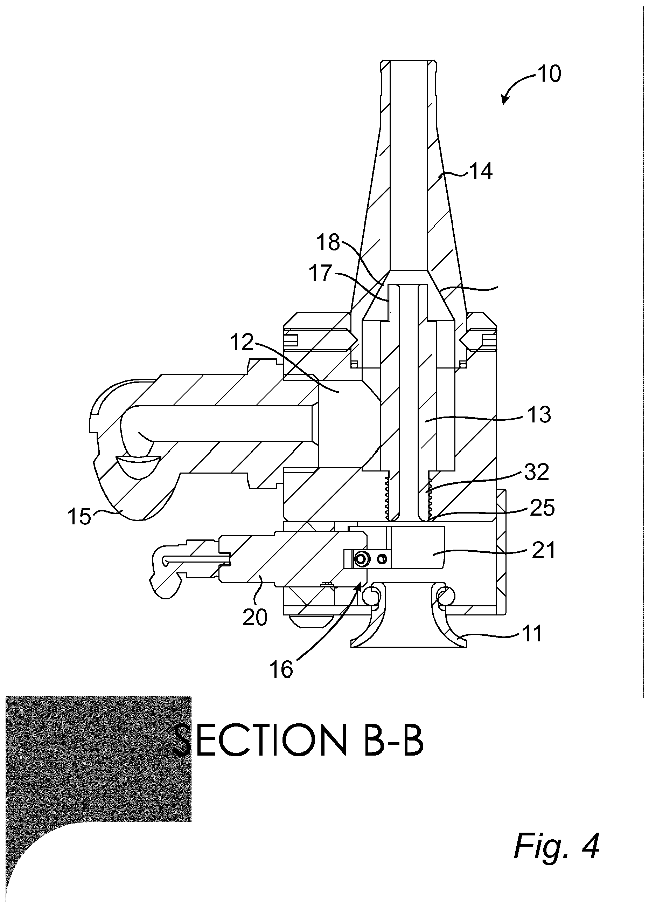

The fiber strand feeding tube 13 is arranged at least partially inside the chamber 12 and is attached thereto. For example, the fiber strand feeding tube 13 is fixed to the chamber 12. The nozzle 14 is connected to the chamber 12 and encloses an outlet end portion 17 of the fiber strand feeding tube 13 to form a passage 18 for a flow of pressurized air between an interior surface of the fiber strand feeding tube 13 and an interior surface of the nozzle 14. Hence, the passage 18, which passage 18 is illustrated in Fig. 4, is connected to the connector tube 15, so that pressurized air can be conducted into the chamber 12, further along the fiber strand feeding tube 13 and into the passage 18 to a position in the nozzle 14 in front of the fiber strand feeding tube 13, wherein the pressurized air is brought into contact with the fiber strand to expand it and achieve the texturizing of the fiber strand. The texturizing device 10 is arranged to create turbulence of the pressurized air and to feed the fiber strand into said turbulence to cause disorganization, such as loops, of the fibers in the fiber strand to achieve the texturizing of the fiber strand material. Hence, the texturizing device 10 is arranged for feeding the fiber strand through the fiber strand feeding tube 13 and into the nozzle 14, wherein the fiber strand is expanded by means of the flow of pressurized air.

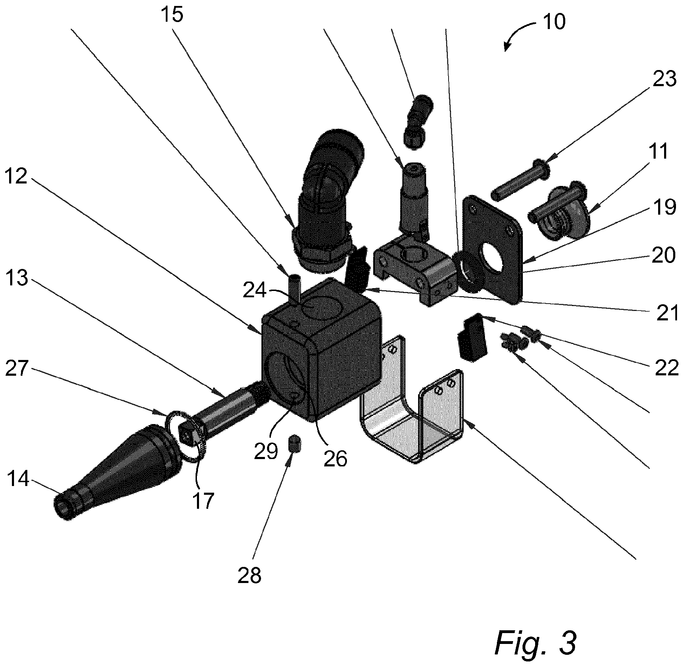

The fiber strand inlet 11 is, for example, arranged a thread guide with a rounded edge as seen particularly in Fig. 4, for providing a smooth entry of the fiber strand into the fiber strand locking device 16. For example, the fiber strand inlet 11 is arranged as a separately produced article, as illustrated with reference to Fig. 3. In the illustrated embodiment, the fiber strand inlet 11 is formed with a rounded conical outer tube portion and a cylindrical inner tube portion having an exterior thread for connection to the fiber strand locking device 16 through a bracket 19 having a through opening with an interior thread for engaging the exterior thread of the fiber strand inlet 11, so that the fiber strand can be conducted through the fiber strand inlet 11 to the fiber strand locking device 16. Alternatively, the fiber strand inlet 11 is an opening in said bracket 19 or an opening into the chamber 12.

In the illustrated embodiment, as seen particularly in Figs. 3 and 4, the fiber strand locking device 16 comprises a gripper bracket 20, a first gripper finger 21 and a second gripper finger 22, wherein at least the first gripper finger 21 is pivotally connected to the gripper bracket 20 and is pivotably arranged between a first position for clamping the fiber strand between the first and second gripper fingers 21, 22, and a second position for allowing the fiber strand to be fed towards the fiber strand feeding tube 13. For example, the first and second gripper fingers 21, 22 are pivotally connected to the gripper bracket 20 and are pivotable toward each other for clamping the fiber strand between them. For example, the fiber strand locking device 16 is pneumatically operated, wherein the first gripper finger 21 and, if applicable, the second gripper finger 22 are connected to a pressurized air supply, such as a compressor or similar (not illustrated). Alternatively, the fiber strand locking device 16 comprises an electric motor for operating the first or both of the gripper fingers 21, 22. According to one embodiment the fiber strand locking device 16 is a separate device, which, e.g. is a conventional standard-type gripping device available for use in applications not related to the technical field of the present invention. The fiber strand locking device 16 is arranged before the chamber 12 in the illustrated embodiment. Alternatively, the fiber strand locking device 16 is arranged inside the chamber 12. For example, the fiber strand locking device 16 is connected to the chamber 12 by means of fastening means 23, such as screws, which screws according to the illustrated embodiment extends through the bracket 19, through the gripper bracket 20 and into a rear side portion of the chamber 12.

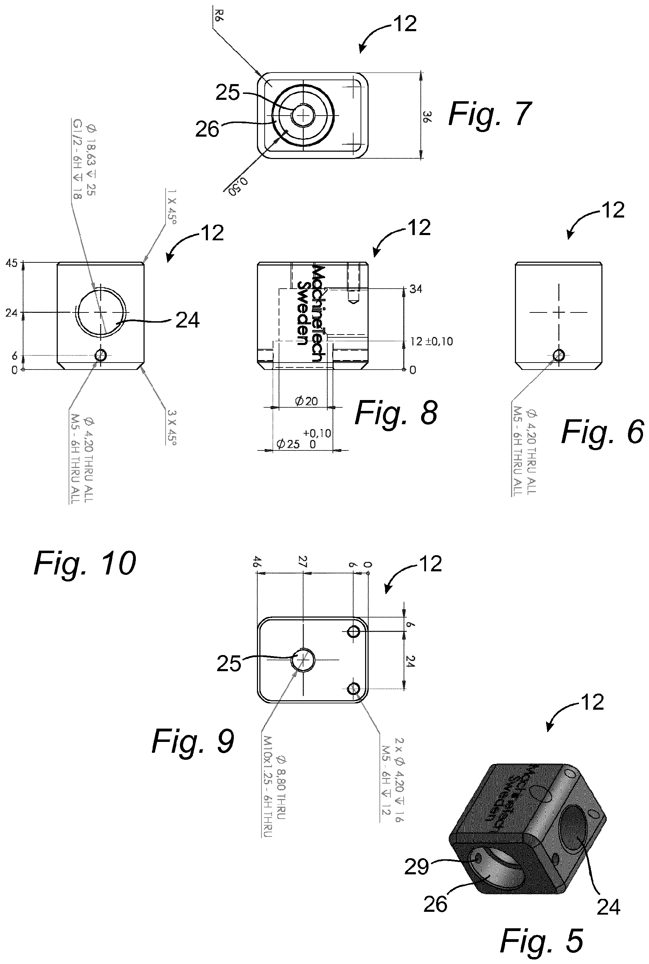

With reference to Figs. 5 to 10 the chamber 12 is illustrated more in detail according to one embodiment. The chamber 12 comprises an air inlet 24 for the flow of pressurized air, a through rear opening 25 and a through front opening 26. The air inlet 24, which is illustrated particularly in Figs. 5 and 10, is connectable to the supply of pressurized air through the connector tube 15 to supply pressurized air to the chamber 12. In the illustrated embodiment, the air inlet 24 is arranged to supply air perpendicular to the fiber strand feeding tube 13. For example, the air inlet 24 is arranged perpendicular to the front and rear openings 25, 26. Alternatively, the air inlet for conducting pressurized air into the chamber 12 is arranged in a rear side portion of the chamber 12. In the illustrated embodiment, the rear and front openings 25, 26 are aligned. The fiber strand feeding tube 13 is connected or connectable to the rear opening 25, such as by means of threads, so that the fiber strand can be fed into the tube 13 through the rear opening 25. Hence, according to the illustrated embodiment, the rear opening 25 is arranged with an interior thread. For example, the fiber strand feeding tube 13 is detachably connectable to the chamber 12 and is replaceable. The nozzle 14 is connectable to the chamber 12 at the front opening 26, so that air and fiber material can be conducted out from the chamber 12 through the front opening 26 and the nozzle 14. For example, the front opening 26 is arranged for receiving a portion of the nozzle 14, which is then inserted into the front opening. Optionally, a sealing 27, such as an o-ring, is arranged between a flange of the nozzle 14 and the exterior front side of the chamber 12 as can be understood from Fig. 3 For example, the nozzle 14 is detachably connectable to the chamber 12 through a screw 28 extending through a hole 29 perpendicular to the longitudinal direction of the tube 13 and the feeding direction of the fiber strand. Alternatively, the nozzle 14 is detachably connectable to the chamber 12 in another suitable manner, such as by means of threads or by means of longitudinally extending screws extending through a flange of the nozzle 14 and into a front portion of the chamber 12 or in any other suitable manner. For example, the chamber 12 is a separately produced article. For example, the chamber 12 is made of metal, such as steel.

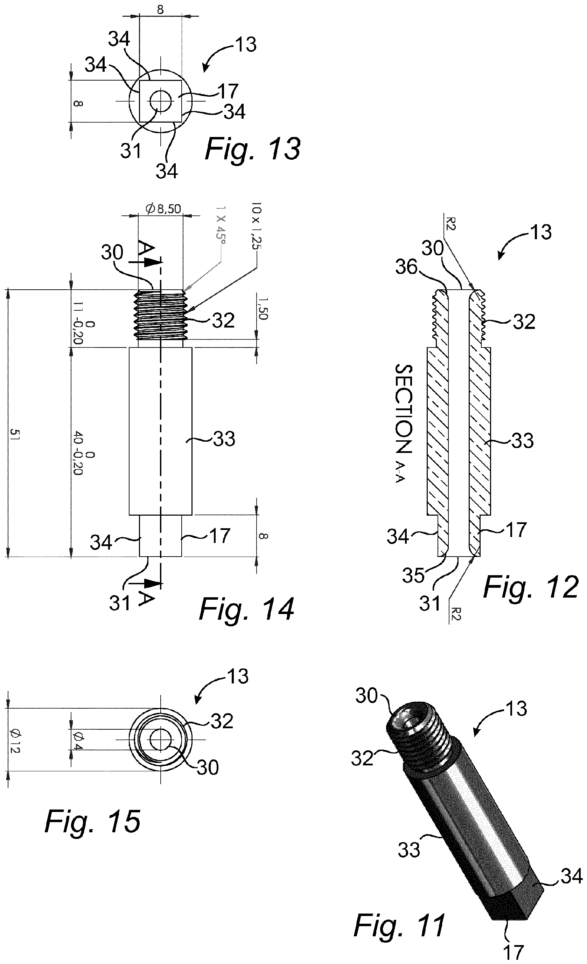

With reference to Figs. 11 to 15 the fiber strand feeding tube 13, also simply called the tube 13, is illustrated more in detail according to one embodiment. The tube 13 comprises an inlet 30, an outlet 31, a fastening portion 32 and the outlet end portion 17. For example, the tube 13 also comprises an intermediate portion 33 arranged between the fastening portion 30 and the outlet end portion 17. The fastening portion 30 is arranged for fastening the tube 13 in relation to the chamber 12. In the illustrated embodiment, the tube 13 is attached or connectable to the chamber 12, such as at the rear opening 25 thereof. In the illustrated embodiment, the fastening portion 32 is arranged with threads. The outlet end portion 17 is arranged with one or more flat external sides 34, which sides 34 extend substantially in parallel to the longitudinal direction of the tube 13 and in parallel to the feeding direction of the fiber strand, to at least partially divide the flow of air into different flow portions, which flow portions then are brought to engage the fiber strand. For example, the outlet end portion 17 is arranged with at least two flat external sides 34. According to one embodiment, the outlet end portion 17 is arranged with a plurality of external flat sides 34 in an exterior polygonal configuration to at least partially divide the pressurized air flowing along the exterior of the tube 13 into a plurality of flow portions and guide said flow portions from different sides towards the fiber strand exiting the tube 13. For example, the diameter of the intermediate portion 33 is bigger than the height or width of a flat side 34 of the outlet end portion 17, so that the outlet end portion 17 is arranged with a smaller height and width than the intermediate portion 33. It has been found that conducting the air flow to interact with the fiber strand from different sides in this manner provides a favourable texturizing of the fiber material and a texturized fiber product having favourable properties, such as favourable properties for insulation and for use as sound absorbing materials. Hence, the outlet end portion 17 is arranged with an external configuration which has a polygonal cross section, e.g. having 3 to 6 sides or 4 sides. For example, the external sides of the outlet end portion 17 are equal, wherein the cross section of the outlet end portion 17 is formed as a regular polygon. For example, the diameter of the outer end portion 17 is smaller than the diameter of the intermediate portion 33. According to one embodiment, the outlet end portion 17 is arranged with an external peripheral configuration which has a square cross section.

In the illustrated embodiment, the tube 13 is formed with a rounded interior outlet edge 35. The interior outlet edge 35 is rounded and smooth to avoid breaking of fibers exiting the tube 13 during texturizing operation. For example, the interior outlet edge 35 of the fiber strand feeding tube 13 is arranged with a radius of at least 1 mm and a curvature of at least 45 degrees from the inner side and outwards. For example, the interior outlet edge 35 is arranged with a radius of about 2 mm. For example, the interior outlet edge 35 is arranged with a curvature of about 90 degrees, wherein the rounded interior outlet edge 35 extends substantially as a quarter circle from the longitudinal direction to a direction perpendicular to the feeding direction of the fiber strand. In the illustrated embodiment, the tube 13 is also arranged with a rounded interior inlet edge 36, which, e.g. is arranged in a similar manner as the interior outlet edge 35.

According to one embodiment, the tube 13 is produced as a separate article to be connected to the chamber 12. For example, the tube 13 is detachably connectable to the chamber 12 through the fastening portion 32 and is replaceable. For example, the tube 13 is arranged in metal, such as a metal different from the chamber 12. For example, the tube 13 is formed in brass.

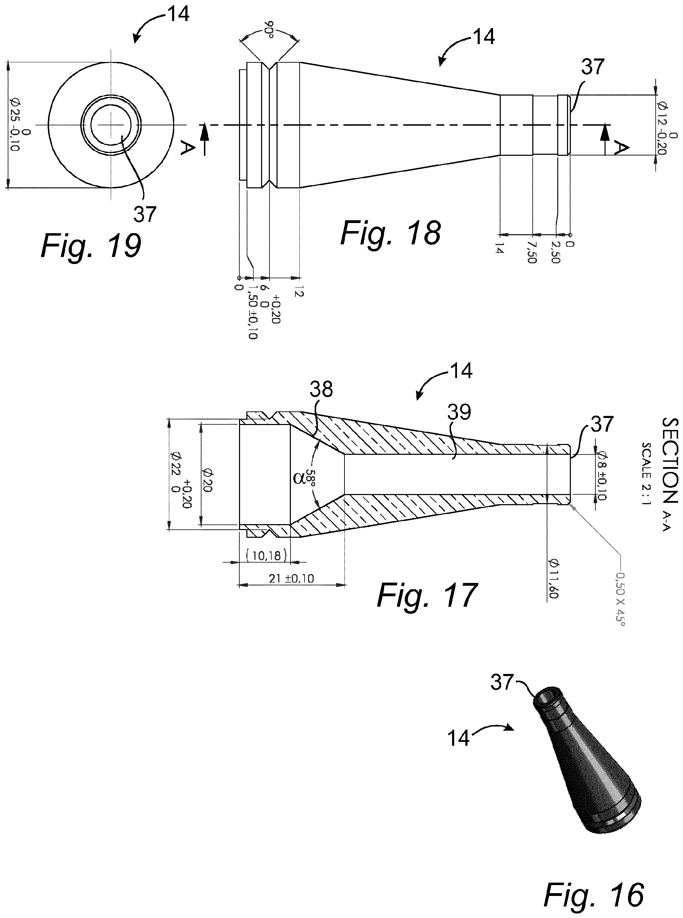

With reference to Figs. 16-19 the nozzle 14 is illustrated more in detail according to one embodiment. The nozzle 14 is arranged to be connected to the chamber 12, to enclose the outlet end portion 17 of the tube 13 to form the passage 18 for the pressurized air, and to feed the texturized fiber product out from the texturizing device 10. The nozzle 14 is arranged with an outlet 37 and a tapering portion 38, i.e. at least interiorly tapering portion 38, for enclosing the outlet end portion 17 of the fiber strand feeding tube 13 to form the passage 18 between the tapering portion 38 and the exterior surface of the outlet end portion 17. For example, the tapering portion 38 is formed as a truncated cone or a frustum having a circular cross section. For example, the tapering portion 38 is shaped as a right circular truncated cone having a centre axis aligned with a centre axis of the tube 13. The tapering portion 38 has a tapering angle a, which tapering angle a, e.g. is 40-70 degrees, 50-65 degrees, 55-60 degrees or 58 degrees. The tapering portion 38 is tapered towards the outlet 37. For example, the tapering portion 38 extends in front of the outlet end portion 17 of the tube 13. In the illustrated embodiment, the tapering portion 38 leads to the outlet 37 through a cylindrical portion 39.

According to one embodiment, the nozzle 14 is produced as a separate article to be connected to the chamber 12. For example, the nozzle 14 is detachably connectable to the chamber 12 and is replaceable. For example, the nozzle 14 is arranged in metal, such as a metal different from the chamber 12 and/or a metal different from the tube 13. For example, the nozzle 14 is formed in bronze.

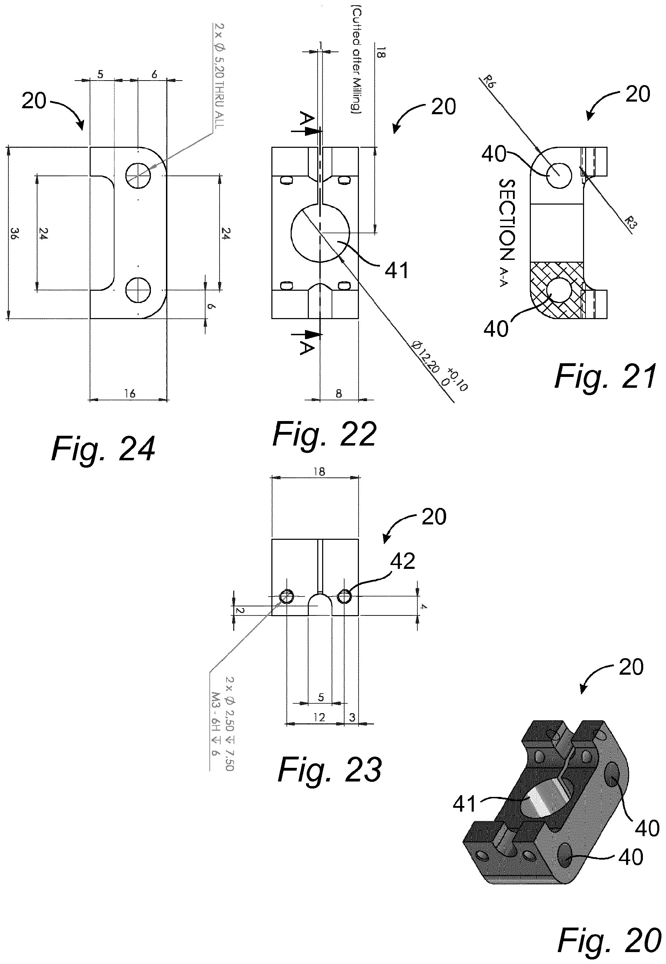

With reference to Figs. 20-24 the gripper bracket 20 of the fiber strand locking device 16 is illustrated more in detail according to one embodiment. The gripper bracket 20 is arranged to be connected to the chamber 12, e.g. by means of the fastening means 23 as illustrated in Fig. 3. Hence, in the illustrated embodiment, the gripper bracket 20 is arranged with through holes 40 for receiving the fastening means 23. The gripper bracket 20 also includes an air inlet 41 for connection to a supply of pressurized air for operating the fiber strand locking device 16. The gripper bracket 20 also comprises means for pivotal connection to the gripper fingers 21, 22, such as openings 42 for receiving pins, screws or similar.

According to one embodiment, the gripper bracket 20 is produced as a separate article. For example, the gripper bracket 20 is arranged to be connected to the gripper fingers 21, 22 and a connector for pressurized air to provide a preassembled fiber strand locking device 16 to be connected to the chamber 12. For example, the gripper bracket 20 or the entire fiber strand locking device 16 is detachably connectable to the chamber 12 and is replaceable. For example, the gripper bracket 20 is arranged in metal, such as a metal different from the chamber 12 and/or a metal different from the tube 13 and/or a metal different from the nozzle 14. For example, the gripper bracket 20 is formed in aluminium. Alternatively, the gripper bracket 20 is arranged in a plastic material or composite material.

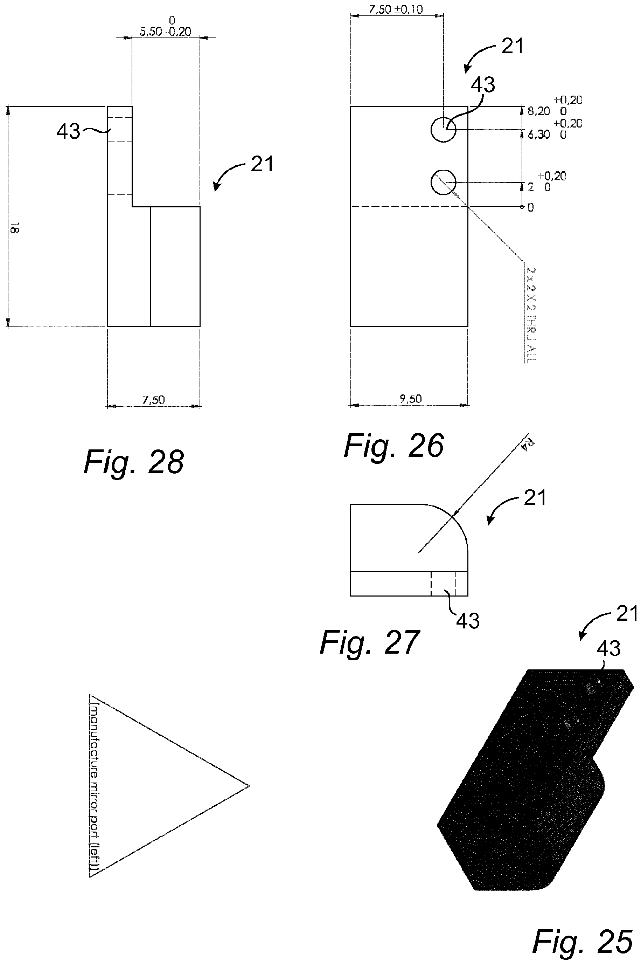

With reference to Figs. 25-28 the first gripper finger 21 of the fiber strand locking device 16 is illustrated more in detail according to one embodiment. For example, the second gripper finger 22 is arranged in a similar manner as the first gripper finger 21. Alternatively, the second gripper finger 22 is arranged as a fixed plate against which the first gripper finger 21 can clap the fiber strand. For example, the first gripper finger 21 comprises openings 43 to provide a pivotal attachment to the gripper bracket 20, e.g. by means of pins, screws or similar.

## Claims

1. A texturizing device (10) for expanding a fiber strand material, comprising a fiber strand inlet (11), a chamber (12), a fiber strand feeding tube (13) and a nozzle (14), wherein the chamber (12) is arranged with an air inlet (24) for a flow of pressurized air, a rear opening (25) and a front opening (26), and wherein the fiber strand feeding tube (13) at least partially is arranged inside the chamber (12) and comprises an outlet end portion (17) being enclosed by the nozzle (14) to form a passage (18) for the flow of pressurized air between the exterior of the outlet end portion (17) and the interior of the nozzle (14), ***characterised* in that** the outlet end portion (17) of the fiber strand feeding tube (13) is arranged with one or more substantially flat external sides (34), so that the pressurized air from the air inlet (24) at least partially is divided into a plurality of flow portions guided towards the fiber strand exiting the fiber strand feeding tube (13).

2. The texturizing device of claim 1, wherein the outlet end portion (17) of the fiber strand feeding tube (13) is arranged with an exterior polygonal cross section having 3 to 6 sides (34).

3. The texturizing device of claim 2, wherein the outlet end portion (17) of the fiber strand feeding tube (13) is arranged with an exterior polygonal cross section having 4 sides (34).

4. The texturizing device of claim 3, wherein the outlet end portion (17) of the fiber strand feeding tube (13) is arranged with a square exterior cross section.

5. The texturizing device according to any of the preceding claims, wherein the nozzle (14) comprises an interior tapering portion (38) enclosing the outlet end portion (17) of the fiber strand feeding tube (13), so that the passage (18) between the exterior of the outlet end portion (17) and the interior of the nozzle (14) is tapered.

6. The texturizing device according to any of the preceding claims, wherein the fiber strand feeding tube (13) is arranged with a rounded interior outlet edge (35).

7. The texturizing device of claim 6, wherein the interior outlet edge (35) of the fiber strand feeding tube (13) is arranged with a radius of at least 1 mm and a curvature of at least 45 degrees.

8. The texturizing device according to any of the preceding claims, comprising a fiber strand locking device (16) for intermittently holding the fiber strand in a stationary position, wherein the fiber strand locking device (16) comprises a gripper bracket (20), a first gripper finger (21) and a second gripper finger (22), wherein at least the first gripper finger (21) is pivotally connected to the gripper bracket (20) and is pivotably arranged between a first position for clamping the fiber strand between the first and second gripper fingers (21, 22), and a second position for allowing the fiber strand to be conducted through the fiber strand feeding tube (13).

9. The texturizing device of claim 8, wherein the first and second gripper fingers (21, 22) are pivotally connected to the gripper bracket (20) and are pivotable toward each other and away from each other for intermittently clamping the fiber strand between them.

10. The texturizing device according to claim 8 or 9, wherein the fiber strand locking device (16) is a separately produced device attachable to the chamber (12).

11. The texturizing device according to any of the preceding claims, wherein the fiber strand feeding tube (13) is a separately produced part which is attachable to the chamber (12), and the nozzle (14) is a separately produced part which is attachable to the chamber (12).

12. The texturizing device according to any of the preceding claims, wherein the rear opening (25) of the chamber (12) is arranged with an interior thread for receiving an exterior thread of a fastening portion (32) of the fiber strand feeding tube (13), so that the fiber strand feeding tube (13) is detachably attachable to the chamber (12).

13. The texturizing device according to any of the preceding claims, wherein the fiber strand feeding tube (13) and/or the nozzle (14) is/are arranged in one or more different materials as the chamber (12).

14. A texturizing method for expanding a fiber strand material, comprising the steps of
a) feeding a fiber strand into a fiber strand inlet (11) and through a fiber strand feeding tube (13),
b) conducting a flow of pressurized air into a chamber (12) enclosing at least a part of the fiber strand feeding tube (13), and distributing said air around said tube (13),
c) conducting the flow of pressurized air into a passage (18) between the exterior of said tube (13) and an interior of a nozzle (14) surrounding an outlet end portion (17) of said tube,
d) at least partially dividing the flow of pressurized air into a plurality of flow portions by means of the outlet end portion (17) of the tube being arranged with one or more substantially flat external sides (34), and
e) bringing the plurality of flow portions of pressurized air into contact with the fiber strand exiting the tube (13) and thereby expanding the fiber strand.

15. The method of claim 14, comprising the step of at least partially dividing the flow of pressurized air into 3 to 6 flow portions by means of the outlet end portion (17) of the tube (13) being arranged with 3 to 6 flat external sides (34).
